# EUROPÄISCHE PATENTSCHRIFT

(11) **EP 2 008 767 B1**
(45) Veröffentlichungstag und Bekanntmachung des Hinweises auf die Patenterteilung: **29.09.2010**
(21) Anmeldenummer: 08010027.4
(22) Anmeldetag: 02.06.2008
(51) Int. Cl.: B23Q 35/10

(54) **Kopierfräsgerät zur Bearbeitung von Werkstücken**
Copy milling device for processing workpieces
Fraiseuse à copier destinée au traitement de pièces à usiner

(30) Priorität: 26.06.2007 DE 102007029395
(43) Veröffentlichungstag der Anmeldung: 31.12.2008
(73) Patentinhaber: Amann Girrbach AG, 6842 Koblach (AT)
(72) Erfinder: Amann, Jürgen, 6842 Koblach (AT)
(74) Vertreter: Hofmann, Ralf U.

(56) Entgegenhaltungen:
- GB-A- 754 955
- US-A- 2 551 953

## Beschreibung

Die Erfindung betrifft ein Kopierfräsgerät zur Bearbeitung von Werkstücken, wobei eine Tastereinheit einem abzutastenden Modell und eine Fräseinheit dem zu bearbeitenden Werkstück zugeordnet sind, und wobei Tastereinheit und Fräseinheit nach Art eines aus Armen und Hebeln gebildeten Pantographen miteinander in Wirkverbindung stehen und zumindest zwei Pantographen vorgesehen sind.

Kopierfräsgeräte mit Pantographen sind beispielsweise aus den US-Patentschriften 4,141,145 und 2,631,375 und in einer Anwendung bei einer Kopierfräsmaschine im Dentalbereich aus der W02006/067630A2 bekannt geworden. Bei allen diesen Kopierfräsgeräten ist als nachteilig anzusehen, dass der Taster und der Fräser bei einer auf- und ab geführten Verstellung entsprechend einem Kreisbogen mit dem Kreismittelpunkt gemäß der Aufhängung des Pantographen sich bewegen. Es ist daher praktisch nicht möglich, in einem Modell eine Bohrung abzutasten und dann mit dem Fräser ein exaktes Loch herzustellen.

Aus der DE 22 63 970 A ist eine Kopierfräsmaschine mit einem Pantographen als Bewegungsübertragungsmittel in einer Horizontalebene und einem Pantographen als Bewegungsübertragungsmittel in einer Vertikalebene bekannt.

Die GB 754 955 zeigt eine Kopierfräseinrichtung gemäß dem Oberbegriff von Anspruch 1 mit zwei nebeneinander angeordneten Pantographen.

Die Erfindung hat sich zur Aufgabe gestellt, ein Kopierfräsgerät der eingangs genannten Art also mit zumindest zwei Pantographen, so auszubilden, dass in exakter und einfacher Art und Weise auch vertikal verlaufende Flächen oder Bohrungen oder sonstige Vertiefungen abgetastet und auch gefräst werden können.

Dies gelingt erfindungsgemäß bei einem Kopierfräsgerät der oben genannten Art, indem die Arme der Pantographen, vorzugsweise paarweise, übereinander liegend angeordnet sind, wobei jeweils die übereinander liegenden Arme der Pantographen über jeweils zwei zumindest annähernd vertikal verlaufende Zwischenhebel miteinander verbunden sind.

Es kann hierbei vorgesehen sein, dass zwei parallel zueinander angeordnete Pantographen übereinander liegend angeordnet sind, wobei die übereinander liegenden Arme des Pantographen über jeweils zwei zumindest annähernd vertikal verlaufende Zwischenhebel miteinander verbunden sind, wobei an den gleich gerichteten Enden von jeweils zwei an annähernd parallel zueinander ausgerichteten und paarweise übereinander liegenden Armen angeordneten, annähernd vertikal verlaufenden Zwischenhebeln des Pantographen einerseits die Tastereinheit und andererseits die Fräseinheit angeordnet sind.

An sich wird für die durch die Tastereinheit abgetastete Form und den Einsatz der Fräsereinheit zur Herstellung eines zum Modell verkleinerten oder vergrößerten Werkstückes nur ein Pantograph benötigt. Wenn nun aber zwei Pantographen übereinander angeordnet und miteinander in Wirkverbindung stehen, kann erreicht werden, dass die Tastereinheit und die Fräsereinheit nicht nur in einer Nullstellung, sondern in allen Verschwenkwinkeln in vertikaler Ausrichtung bewegbar sind. Es können daher vertikal verlaufende Flächen, Ausnehmungen oder Bohrungen abgetastet und auch gefräst bzw. geschliffen werden.

Ferner wird vorgeschlagen, dass die an den gleich gerichteten Enden von jeweils zwei annähernd parallel zueinander ausgerichteten und paarweise übereinander liegenden Armen angeordneten, vertikal verlaufenden Zwischenhebel des Pantographen als Halteelement bzw. Einspannelement einerseits für die Tastereinheit und andererseits für die Fräseinheit ausgebildet sind. Dadurch ist die Tastereinheit und auch die Fräseinheit jeweils an einem Zwischenhebel zu befestigen, der Teil eines in einer vertikalen Ebene liegenden Pantographen ist. Es werden also durch die Anordnung von zwei Pantographen übereinander und durch die Verbindung dieser übereinander angeordneten Pantographen über die Zwischenhebel zusätzlich in einer vertikal ausgerichteten Ebene liegende Pantographen gebildet.

Um auch bei hier vorgesehenen, übereinander liegenden Pantographen die Verkleinerung und Vergrößerung optimal bewerkstelligen zu können, wird vorgeschlagen, dass die gleichgerichteten Enden zweier paarweise übereinander angeordneter, die Fräseinheit und/oder die Tastereinheit tragenden Arme verstellbare Abschnitte zur Verlängerung oder Verkürzung dieser Arme aufweisen. Es ist dadurch ermöglicht, dass auch nach der Neueinstellung einer Verkleinerung oder Vergrößerung die die Tastereinheit oder die Fräsereinheit haltenden Zwischenhebel wiederum in der exakten vertikalen Einstellung verbleiben.

In diesem Zusammenhang sieht eine Ausführungsvariante vor, dass die verstellbaren Abschnitte der die Fräseinheit und/oder die Tastereinheit tragenden Arme ein Langloch aufweisen, in welches eine in dem jeweils anderen Arm eindrehbare Klemmschraube eingreift. Damit kann eine sehr einfache konstruktive Maßnahme verwirklicht werden, wobei auch eine schnelle Verstellung oder Justierung möglich ist.

Weiter erfindungsgemäße Merkmale und besondere Vorteile werden in der nachstehenden Beschreibung anhand der Zeichnungen noch näher erläutert. Es zeigen:

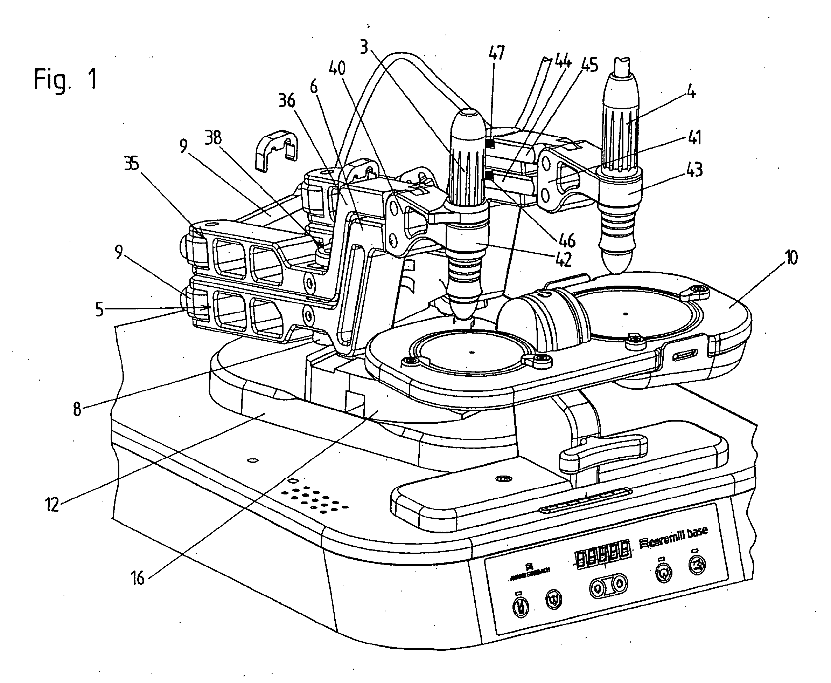

- Fig.1: eine Schrägsicht eines Kopierfräsgerätes mit Pantograph sowie Tastereinheit und Fräsereinheit sowie einer Halterung für ein Modell und ein Werkstück;

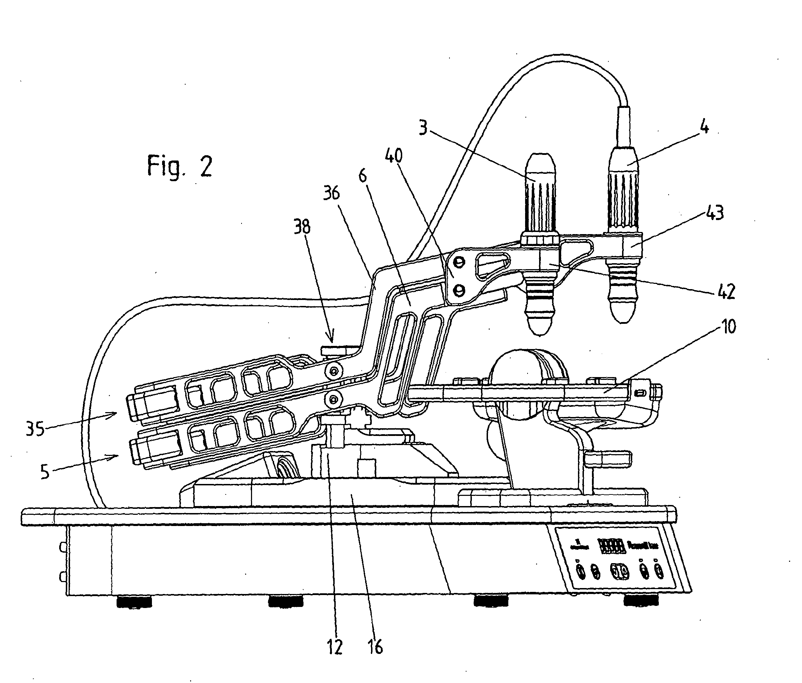

- Fig.2: eine Seitenansicht des Kopierfräsgerätes von schräg vorne gesehen;

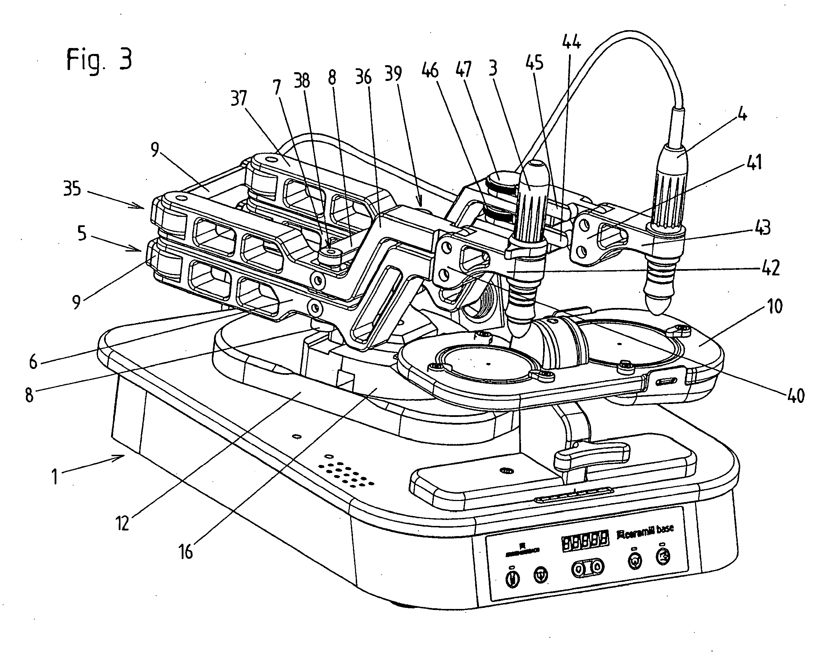

- Fig.3: eine Seitenansicht des Kopierfräsgerätes von schräg vorne und von schräg oben gesehen;

Das in den Zeichnungen dargestellte Kopierfräsgerät 1 dient zur Bearbeitung von Werkstücken aus beispielsweise keramischen Werkstoffen, wobei eine Tastereinheit 3 einem abzutastenden Modell und eine Fräsereinheit 4 dem zu bearbeitenden Werkstück zugeordnet werden können. Tastereinheit 3 und Fräsereinheit 4 stehen nach Art eines Pantographen 5 bzw. nach der Erfindung nach Art eines Doppelpantographen 5, 35 miteinander in Wirkverbindung.

Der erste Pantograph 5 weist zwei Arme 6,7 und zwei Hebel 8, 9 auf, wobei die Arme und Hebel so verbunden sind, dass das so gebildete, veränderliche Viereck ein Parallelogramm darstellt.

Bei dem in den Figuren gezeigten Fräsgerät 1 werden zwei parallel zueinander angeordnete Pantographen 5 und 35 übereinander liegend angeordnet. Der zweite Pantograph 35 weist Arme 36 und 37 und die Arme 36 und 37 zu einem Parallelogramm verbindende Hebel auf. Er kann genau gleich wie der erste Pantograph 5 ausgebildet sein.

Die übereinander liegenden Arme 6, 36 und 7, 37 der beiden Pantographen 5 und 35 sind über jeweils zwei in der dargestellten Betriebsstellung zumindest annähernd vertikal verlaufende Zwischenhebel 38, 39 und 40, 41 miteinander verbunden. An den gleich gerichteten Enden von jeweils zwei annähernd parallel zueinander ausgerichteten und paarweise übereinander liegenden Armen 6, 36 und 7, 37 angeordneten, annähernd vertikal verlaufenden Zwischenhebeln 40, 41 des Pantographen 5, 35 sind einerseits die Tastereinheit 3 und andererseits die Fräseinheit 4 angeordnet. Unter "annähernd vertikal" werden vorzugsweise alle Winkel mit einer Abweichung von höchstens 5° von der Vertikalen verstanden. An sich wird eine exakte Wirkung der zwei übereinander angeordneten Pantographen dann erreicht, wenn die Zwischenhebel 38, 39 und 40, 41 tatsächlich bzw. exakt vertikal verlaufend angeordnet sind. Die Bezeichnung der parallel zueinander ausgerichteten Arme bedeutet, dass die Arme zumindest bereichsweise, vorzugsweise vollständig, im gleichen Abstand nebeneinander bzw. übereinander verlaufen, bzw. sich zumindest über weite Teile ihrer Erstreckung im gleichen Abstand zueinander befinden. Unter "annähernd parallel" sind vorzugsweise Abweichungen von maximal 5° von der exakten Parallelität akzeptabel.

Das vertikale Verlaufen bzw. die vertikale Ausrichtung der Zwischenhebel 38, 39 und 40, 41 bezieht sich nicht so sehr auf die äußere Form der Zwischenhebel, da diese ja unterschiedlich sein kann, sondern vielmehr auf die vertikal übereinander liegende Anordnung der an den Zwischenhebeln 38, 39 und 40, 41 vorgesehenen Gelenke, mit denen die Arme 6, 36 und 7, 37 an den Zwischenhebeln angelenkt sind. Hierbei tragen die am Schlitten 16 angeordneten Zwischenhebel 38 und 39 die Arme 6, 36 und 7, 37 und damit die Pantographen 5, 35, während die Zwischenhebel 40 und 41, an denen die Tastereinheit 3 und die Fräseinheit 4 angeordnet sind, wiederum von den Armen 6,36 und 7, 37 getragen werden.

Bei beiden Pantographen 5 und 35 sind die Arme 6, 36,7, 37 und die Hebel 8, 9 zur Veränderung des Verkleinerungs- oder Vergrößerungsfaktors zumindest teilweise in ihrer Länge verstellbar und der gemeinsame Bewegungsradius der Pantographen 5 ist ebenfalls einstellbar. Weiters ist eine Arbeitsplatte 10 zur Aufnahme des Modells und des zu bearbeitenden Werkstückes vorgesehen oder aber es sind entsprechend verdreh- und verschwenkbare, synchron verstellbare Aufnahmeelemente für das Modell und das Werkstück vorhanden.

Die an den gleich gerichteten Enden von jeweils zwei annähernd parallel zueinander ausgerichteten und paarweise übereinander liegenden Armen 6, 36 und 7, 37 angeordneten, annähernd vertikal verlaufenden Zwischenhebel 40, 41 des Pantographen sind als Halteelement 42, 43 bzw. Einspannelement einerseits für die Tastereinheit 3 und andererseits für die Fräseinheit 4 ausgebildet.

Die gleichgerichteten Enden zweier paarweise übereinander angeordneter, die Fräseinheit 4 und/oder die Tastereinheit 3 tragenden Arme 6, 36 bzw. 7, 37 weisen verstellbare Abschnitte 44, 45 zur Verlängerung oder Verkürzung dieser Arme 6, 36 bzw. 7, 37 auf. Diese verstellbaren Abschnitte 44, 45 der die Fräseinheit 4 und gegebenenfalls auch die Tastereinheit 3 tragenden Arme 6, 36 bzw. 7, 37 weisen ein Langloch auf, in welches eine in dem jeweils anderen Arm eindrehbare Klemmschraube 46, 47 eingreift.

Der eigentlich als Doppelpantograph zu bezeichnende Pantograph ist das Herzstück eines mechanischen Kopierfräsgerätes. Er ermöglicht durch stufenlose Verstellmöglichkeit der Position der Gelenkwinkel bzw. der Aufnahme der Fräsereinheit 4 einen Vergrößerungsmaßstab von z.B. 20% bis 30%, vorzugsweise 23% bis 26%, in 0.5er-Schritten oder auch komplett stufenlos. Die Führung mittels Pantographen bewirkt dabei eine Bewegung in allen drei Raumachsen. Es lässt sich also neben der Bearbeitungsposition auch die Bearbeitungstiefe bzw. das Abheben des Fräsers vom Werkzeug mitbestimmen. Gerade aber durch die Übereinanderanordnung von zwei Pantographen und deren Verbindung unter Bildung von zusätzlichen, in einer Vertikalebene liegenden Pantographen wird es ermöglicht, in exakter Weise vertikale Flächen auch in Ausnehmungen und beispielsweise in Bohrungen optimal abzutasten und im Werkstück genau zu fräsen oder eben sogar zu bohren.

Eine Grundplatte 12 wird zweckmäßigerweise aus einer rostfreien Edelstahlplatte oder aus Aluminium gebildet und trägt sämtliche Einzelteile des Kopierfräsgerätes 1. Ihre Abmessungen sind im Detailfall zu definieren, sie sollten jedoch so klein wie möglich sein, um möglichst Platz sparend in einem Labor untergebracht werden zu können.

Die in die Fräsereinheit 4 einzusetzenden Fräser und auch die mit der Tastereinheit 3 zusammenwirkenden Taster bestehen zweckmäßig aus rostfreiem Hartmetall und existieren immer als Paar in den jeweiligen verschiedenen Durchmessern. Vorteilhaften Abmessungen der Fräser von 1.00, 2.00, 3.00 und 3.90 mm stehen Abmessungen der Taster mit Durchmessern von 0.80, 1,60, 2,40 und 3,20 mm gegenüber. Dadurch ist dem Vergrößerungsfaktor entsprechend Rechnung getragen.

Besonders wichtig ist die richtige Einstellung der Arme 7, 37 für die Fräsereinheit. Die richtige Einstellung ist gewährleistet, wenn nach einer Auf- oder Abwärtsbewegung des Armes 7, 37 die Drehachse des Pantographenarmes, der Abtastpunkt und der Fräseransatzpunkt wieder gemeinsam auf einer Nulllinie liegen. Die Auf- oder Abwärtsbewegung symbolisiert in diesem Fall die prozentuale Vergrößerung des Fräsobjektes. Um eine Vergrößerung eines Objektes zu erhalten, darf der Fräsarm 7, 37 niemals gleichlang oder kürzer als der Tastarm 6, 36 sein. Verlängert man den Fräsarm (>23%) kommt es zur Verschiebung des Abtastpunktes und des Fräseransatzpunktes, sie befinden sich nicht mehr auf der Nulllinie. Um ein Gleichgewicht des Systems wiederherzustellen, muss der Pantograph 5, 35 entlang des Pantographenarmes verschoben werden. Dadurch senkt sich der Pantographenarm ab und die genannten Punkte befinden sich mit der Drehachse des Pantographen 5, 35 wieder auf der Nulllinie. Die Punkte werden bei diesem Vorgang auf der Nulllinie nach rechts verschoben. Auf Grund dessen muss die Arbeitsplatte 10 oder eben entsprechende Aufnahmeelemente ebenfalls nach rechts verschoben werden, da sonst die Aufnahme des Modells und des Werkstückes nicht mittig zum Fräsarm 7, 37 und Tastarm 6, 36 liegen würden. Findet nur eine Ausrichtung (Verlängerung/ Verkürzung) des Fräsarmes 7, 37 statt, ohne zusätzliche Verschiebung am Pantographenarm, befindet sich die Fräsereinheit 4 nicht im Zentrum des Bearbeitungsbereiches. Dies bewirkt bei Drehung der Arbeitsplatte 10 oder entsprechender Aufnahmeelemente, dass der Fräser exzentrisch gelagert ist und ein oval gefrästes Objekt entsteht. Hier ist in besonderer Weise die Ausgestaltung mit den zwei übereinander liegenden Pantographen 5, 35 vorteilhaft.

Beim erfindungsgemäßen Kopierfräsgerät 1 soll der Pantograph 5, 35 zur Einstellung des Bewegungsradius gegenüber einem Pantographenarm verstellbar ausgeführt sein. Vorteilhaft ist allerdings, wenn der Pantographenarm als eine Art Schlitten 16 und in dieser Form als Halterung für den Pantographen 5, 35 ausgeführt ist, welcher an einer in einem vorbestimmten Radius verlaufenden Führungsschiene (in der Zeichnung nicht gezeigt) befestigt ist. Die Führungsschiene ist dabei entlang von Führungselementen verschiebbar geführt.

Eine einfache Verbindung des Pantographen 5, 35 mit dem Schlitten 16 sieht vor, dass einer der die Fräseinheit 4 und die Tastereinheit 3 tragenden Arme 6, 36, 7, 37 verbindenden Hebel fest und unverschiebbar mit der Halterung, also mit dem Schlitten 16, verbunden ist. Der Schlitten 16 selbst ist dann gegenüber der darunter liegenden Führungsschiene verstellbar gehalten.

Mit dem erfindungsgemäßen Kopierfräsgerät sollen beispielsweise Werkstücke aus keramischen Werkstoffen für die. Dentaltechnik bearbeitet werden. Dabei ist besonders Zirkoniumdioxid vorgesehen. Zirkoniumdioxid dient beim Kopierfräsen als Grundbearbeitungswerkstoff im teilgesinterten Zustand, der so genannte Weißling. Der Werkstoff lässt sich in diesem Zustand leicht ver- und bearbeiten. Das erfindungsgemäße Kopierfräsgerät ist aber auch für den Einsatz im allgemeinen Maschinenbau, in der Kunststofftechnik und in anderen Bearbeitungsbereichen, d.h. also bei der Bearbeitung und somit beim Kopierfräsen oder Kopierschleifen von irgendwelchen Materialien geeignet.

### Legende zu den Hinweisziffern:

- 1: Kopierfräsgerät
- 3: Tastereinheit
- 4: Fräseinheit
- 5: Pantograph
- 6: Arm (für Tastereinheit)
- 7: Arm (für Fräseinheit)
- 8: Hebel
- 9: Hebel
- 10: Arbeitsplatte
- 12: Grundplatte
- 16: Schlitten
- 35: Pantograph
- 36: Arm
- 37: Arm
- 38: Zwischenhebel
- 39: Zwischenhebel
- 40: Zwischenhebel
- 41: Zwischenhebel
- 42: Halteelement
- 43: Halteelement
- 44: Abschnitt
- 45: Abschnitt
- 46: Klemmschraube
- 47: Klemmschraube

## Patentansprüche

1. Kopierfräsgerät zur Bearbeitung von Werkstücken, wobei eine Tastereinheit einem abzutastenden Modell und eine Fräseinheit dem zu bearbeitenden Werkstück zugeordnet sind, und wobei Tastereinheit und Fräseinheit nach Art eines aus Armen und Hebeln gebildeten Pantographen miteinander in Wirkverbindung stehen und zumindest zwei Pantographen vorgesehen sind, wobei jeweils die Arme (6, 36, 7, 37) der Pantographen (5, 35) über jeweils zwei Zwischenhebel (38, 39, 40, 41) miteinander verbunden sind und an einem der Zwischenhebel (40) die Tastereinheit (3) und an einem anderen der Zwischenhebel (41) die Fräseinheit (4) angeordnet ist **dadurch gekennzeichnet, dass** die Arme (6, 36, 7, 37) der Pantographen (5, 35), vorzugsweise paarweise, übereinander liegend angeordnet sind, wobei jeweils die übereinander liegenden Arme (6, 36, 7, 37) der Pantographen (5, 35) über jeweils zwei zumindest annähernd vertikal verlaufende Zwischenhebel (38, 39, 40, 41) miteinander verbunden sind.

2. Kopierfräsgerät nach Anspruch 1, **dadurch gekennzeichnet, dass** der Zwischenhebel (40), an dem die Tastereinheit (3) angeordnet ist, und der Zwischenhebel (41), an dem die Fräseinheit (4) angeordnet ist, an gleich gerichteten Enden von jeweils zwei der übereinander liegenden Armen (6, 36, 7, 37) angeordnet sind.

3. Kopierfräsgerät nach Anspruch 1 oder 2, **dadurch gekennzeichnet, dass** die annähernd vertikal verlaufenden Zwischenhebel (40, 41) der Pantographen (5, 35) als Halteelement (42, 43) bzw. Einspannelement einerseits für die Tastereinheit (3) und andererseits für die Fräseinheit (4) ausgebildet sind.

4. Kopierfräsgerät nach Anspruch 2 oder 3, **dadurch gekennzeichnet, dass** die gleichgerichteten Enden zweier paarweise übereinander angeordneter, die Fräseinheit (4) und/oder die Tastereinheit (3) tragenden Arme (7, 37) verstellbare Abschnitte (44, 45) zur Verlängerung oder Verkürzung dieser Arme (7, 37) aufweisen.

5. Kopierfräsgerät nach Anspruch 4, **dadurch gekennzeichnet, dass** die verstellbaren Abschnitte (44, 45) der die Fräseinheit (4) und/oder die Tastereinheit (3) tragenden Arme (7, 37) ein Langloch aufweisen, in welches eine in dem jeweils anderen Arm eindrehbare Klemmschraube (46, 47) eingreift.

6. Kopierfräsgerät nach einem der Ansprüche 1 bis 5, **dadurch gekennzeichnet, dass** die, vorzugsweise paarweise, übereinander liegenden Arme (6, 36, 7, 37) zumindest annähernd parallel zueinander ausgerichtet sind.

## Claims

1. Copy-milling apparatus for machining workpieces, a tracer unit having associated with it a template or model to be traced and a milling unit having associated with it the workpiece to be machined, and the tracer unit and milling unit being operatively connected together by means of a pantograph formed from arms and levers and at least two pantographs being provided, the arms (6, 36, 7, 37) of the respective pantographs (5, 35) being connected together, at their respective connections, by two intermediate levers (38, 39, 40, 41) and the tracer unit (3) being arranged on one (40) of the intermediate levers and the milling unit (4) being arranged on another (41) of the intermediate levers (41), **characterised in that** the arms (6, 36, 7, 37) of the pantographs (5, 35) are arranged to lie one above another, preferably in pairs, the arms (6, 36, 7, 37) which lie one above another of the respective pantographs (5, 35) being connected together, at their respective connections, by two intermediate levers (38, 39, 40, 41) which extend at least approximately vertically.

2. Copy-milling apparatus according to claim 1, **characterised in that** the intermediate lever (40) on which the tracer unit (3) is arranged and the intermediate lever (41) on which the milling unit (4) is arranged are arranged at ends directed in the same direction of, respectively, two arms (6, 36, 7, 37) which lie one above another.

3. Copy-milling apparatus according to claim 1 or 2, **characterised in that** the intermediate levers (40, 41) which extend approximately vertically of the pantographs (5, 35) take the form of holding members (42, 43) or clamping members on the one hand for the tracer unit (3) and on the other hand for the milling unit (4).

4. Copy-milling apparatus according to claim 2 or 3, **characterised in that** the ends which are directed in the same direction of two arms (7, 37) which are arranged one above another as a pair, which arms (7, 37) carry the milling unit (4) and/or the tracer unit (3), have adjustable portions (44, 45) for lengthening or shortening the said arms (7, 37).

5. Copy-milling apparatus according to claim 4, **characterised in that** the adjustable portions (44, 45) of the arms (7, 37) carrying the milling unit (4) and/or the tracer unit (3) have a slotted hole in which a clamping screw or bolt (46, 47) which can be screwed into whichever is the other arm engages.

6. Copy-milling apparatus according to one of claims 1 to 5, **characterised in that** the arms (6, 36, 7, 37) which lie one above another, preferably in pairs, are aligned at least approximately parallel to one another.

## Revendications

1. Fraiseuse à copier destinée au traitement de pièces à usiner, une unité de palpeur étant associée à un modèle à palper et une unité de fraisage étant associée à la pièce à usiner à traiter, et l'unité de palpeur et l'unité de fraisage se trouvant en liaison active l'une avec l'autre à la manière d'un pantographe formé de bras et de leviers et au moins deux pantographes étant prévus, les bras (6, 36, 7, 37) des pantographes (5, 35) étant respectivement reliés les uns aux autres par respectivement deux leviers intermédiaires (38, 39, 40, 41) et sur l'un des leviers intermédiaires (40) étant disposée l'unité de palpeur (3) et sur un autre des leviers intermédiaires (41), l'unité de fraisage (4), **caractérisée en ce que** les bras (6, 36, 7, 37) des pantographes (5, 35) sont disposés de préférence par paires, se trouvant les uns au-dessus des autres, les bras (6, 36, 7, 37) se trouvant les uns au-dessus des autres des pantographes (5, 35) étant respectivement reliés les uns aux autres par respectivement deux leviers intermédiaires (38, 39, 40, 41) s'étendant au moins approximativement verticalement.

2. Fraiseuse à copier selon la revendication 1, **caractérisée en ce que** le levier intermédiaire (40), sur lequel est disposée l'unité de palpeur (3) et le levier intermédiaire (41), sur lequel est disposée l'unité de fraisage (4) sont disposés sur des extrémités de même orientation de respectivement deux des bras se trouvant les uns au-dessus des autres (6, 36, 7, 37).

3. Fraiseuse à copier selon la revendication 1 ou 2, **caractérisée en ce que** les leviers intermédiaires (40, 41) s'étendant approximativement verticalement des pantographes (5, 35) sont réalisés comme un élément de retenue (42, 43) ou comme un élément de serrage d'une part pour l'unité de palpeur (3) et d'autre part pour l'unité de fraisage (4).

4. Fraiseuse à copier selon la revendication 2 ou 3, **caractérisée en ce que** les extrémités de même orientation de deux bras (7, 37) portant l'unité de fraisage (4) et/ou l'unité de palpeur (3), disposés par paires l'un au-dessus de l'autre présentent des sections réglables (44, 45) pour rallonger ou raccourcir ces bras (7, 37).

5. Fraiseuse à copier selon la revendication 4, **caractérisée en ce que** les sections réglables (44, 45) des bras (7, 37) portant l'unité de fraisage (4) et/ou l'unité de palpeur (3) présentent un trou oblong, dans lequel s'engage une vis de serrage (46, 47) pouvant être vissée dans l'autre bras respectif.

6. Fraiseuse à copier selon l'une quelconque des revendications 1 à 5, **caractérisée en ce que** les bras (6, 36, 7, 37) se trouvant les uns au-dessus des autres, de préférence par paires, sont orientés au moins approximativement parallèlement les uns aux autres.
